# EUROPÄISCHE PATENTSCHRIFT

(11) **EP 2 845 276 B1**
(45) Veröffentlichungstag und Bekanntmachung des Hinweises auf die Patenterteilung: **16.03.2016**
(21) Anmeldenummer: 13726495.8
(22) Anmeldetag: 29.05.2013
(51) Int. Cl.: H02B 1/56, H02B 13/025

(54) **VERSCHLUSSVORRICHTUNG FÜR EINE SCHALTANLAGE**
SEALING DEVICE FOR A SWITCHGEAR
DISPOSITIF D'OBTURATION POUR UN ÉQUIPEMENT ÉLECTRIQUE DE COUPURE

(30) Priorität: 19.06.2012 DE 102012210279
(43) Veröffentlichungstag der Anmeldung: 11.03.2015
(73) Patentinhaber: Siemens Aktiengesellschaft, 80333 München (DE)
(72) Erfinder: KARADENIZ, Tahsin, 34860 Kartal - Istanbul (TR)
(86) Internationale Anmeldenummer: PCT/EP2013/061018
(87) Internationale Veröffentlichungsnummer: WO 2013/189704

(56) Entgegenhaltungen:
- EP-A1- 1 059 715
- WO-A1-2009/001425
- JP-U- S 627 709
- US-A- 5 892 195
- US-B1- 7 952 857

## Beschreibung

Die Erfindung betrifft eine Verschlussvorrichtung zum Verschließen einer Durchgangsöffnung zwischen einem ersten Funktionsraum und einem zweiten Funktionsraum einer Schaltanlage mit einem ersten Durchgangsöffnungsbereich und einer Klappe zum Verschließen des ersten Durchgangsöffnungsbereiches bei Druckbeaufschlagung aus dem ersten Funktionsraum.

Eine derartige Verschlussvorrichtung ist beispielsweise aus der US 5892195A bekannt. Dort offenbart ist eine luftisolierte Mittelspannungsschaltanlage mit einer Vielzahl von Funktionsräumen, wobei zwischen den Funktionsräumen Durchgangsöffnungen vorgesehen sind, um innerhalb der Schaltanlage eine Luftzirkulation zu ermöglichen. Diese Durchgangsöffnungen zwischen jeweils benachbarten Funktionsräumen sind mit einer Verschlussvorrichtung in Form einer Klappe versehen, so dass bei Druckbeaufschlagung aus einem Funktionsraum die Klappe derartig gebogen wird, dass die Durchgangsöffnung verschlossen wird und dadurch ein Entweichen des Druckes aus dem Funktionsraum, in welchem die Druckbeaufschlagung stattfindet, in den benachbarten Funktionsraum verhindert wird. Eine derartige Druckbeaufschlagung findet beispielsweise im Falle eines Fehlers in einem Funktionsraum, verbunden mit einem Störlichtbogen und einer Druckwelle von heißem Gas, statt. Die Verschlussvorrichtungen sind daher vorgesehen, ein solches Übertreten aus einem Funktionsraum in einen anderen benachbarten Funktionsraum zu unterbinden, um dort die Zerstörung möglichst gering zu halten.

Die JP S627709 U offenbart ebenfalls eine Verschlussvorrichtung zum Verschließen einer Durchgangsöffnung.

Aufgabe der vorliegenden Erfindung ist es, eine Verschlussvorrichtung der eingangs genannten Art weiterzubilden, welche bei einem kompakten Aufbau eine erhöhte Betriebssicherheit der Schaltanlage gewährleistet.

Erfindungsgemäß gelöst wird diese Aufgabe bei einer Verschlussvorrichtung der eingangs genannten Art durch die Merkmale des Anspruchs 1. Dabei ist ein zweiter Durchgangsöffnungsbereich der Durchgangsöffnung derart vorgesehen, dass bei Druckbeaufschlagung aus dem zweiten Funktionsraum der zweite Durchgangsöffnungsbereich der Durchgangsöffnung durch die Klappe verschließbar ausgebildet ist.

Mit anderen Worten umfasst die Durchgangsöffnung zwischen benachbarten Funktionsräumen neben einem ersten Durchgangsöffnungsbereich einen zweiten Durchgangsöffnungsbereich, wobei die Klappe der Verschlussvorrichtung so angeordnet ist, dass bei Druckbeaufschlagung aus dem ersten Funktionsraum der erste Durchgangsöffnungsbereich verschlossen wird und bei Druckbeaufschlagung aus dem zweiten Funktionsraum der zweite Durchgangsöffnungsbereich verschlossen wird, so dass eine bidirektionale Verschlussvorrichtung ausgebildet ist, welche die Durchgangsöffnung zwischen benachbarten Funktionsräumen, unabhängig davon, in welchem dieser Funktionsräume der Fehlerfall und damit die Druckbeaufschlagung stattfindet, gegeneinander verschließt.

Außerdem sind der erste Durchgangsöffnungsbereich durch Öffnungen in einer Schottwand zwischen dem ersten Funktionsraum und dem zweiten Funktionsraum sowie der zweite Durchgangsöffnungsbereich durch ein an der Schottwand angeordnetes und befestigtes und mit weiteren Öffnungen versehenes Schottblech gebildet, wobei die Klappe mit einem ersten Ende zwischen der Schottwand und dem Schottblech biegbar befestigt ist. Dadurch ist ein einfacher Aufbau realisiert, weil durch die biegbar zwischen dem Schottblech und der Schottwand angeordnete Klappe bei Druckbeaufschlagung aus dem einen Funktionsraum durch Verbiegen der Klappe ein Verschließen der entsprechenden Öffnung in Schottwand bzw. Schottblech realisierbar ist.

In einer besonders vorteilhaften Ausgestaltung der Erfindung weisen der erste Durchgangsöffnungsbereich eine erste Schlitzanordnung sowie der zweite Durchgangsöffnungsbereich eine zweite Schlitzanordnung und die Klappe eine zur ersten und zur zweiten Schlitzanordnung versetzt angeordnete dritte Schlitzanordnung derart auf, dass bei Druckbeaufschlagung aus dem ersten Funktionsraum oder dem zweiten Funktionsraum die Klappe und der erste Durchgangsöffnungsbereich oder die Klappe und der zweite Durchgangsöffnungsbereich die Durchgangsöffnung verschließen. Durch derartige versetzt zueinander angeordnete erste, zweite und dritte Schlitzanordnungen von erstem, zweitem Durchgangsöffnungsbereich und der Klappe ist ein kompakter Aufbau der Verschlussvorrichtung ermöglicht, weil insbesondere auch die Klappe Schlitzanordnungen aufweist, so dass zum Luftaustausch zwischen den Funktionsräumen die Klappe nicht umströmt werden muss, sondern im normalen Betriebsfall bei Luftaustausch zwischen den Funktionsräumen durch die versetzt zueinander angeordneten Schlitzanordnungen von erstem, zweiten Durchgangsöffnungsbereich und Klappe einen ausreichenden Luftaustausch zulassen, welcher dann durch die versetzte Anordnung in einem Störungsfall und Druckbeaufschlagung aus einem der Funktionsräume trotzdem zu einem sicheren Verschließen der Durchgangsöffnung führt.

Die Erfindung wird im Folgenden anhand der Zeichnung und eines Ausführungsbeispiels mit Bezug auf die beiliegenden Figuren näher erläutert. Es zeigen:
- Figur 1: eine schematische Ansicht einer Schaltanlage;
- Figur 2: eine Schnittansicht durch eine Verschlussvorrichtung;
- Figur 3: eine Draufsicht auf ein Ausführungsbeispiel einer erfindungsgemäßen Verschlussvorrichtung; und
- Figur 4: eine weitere Schnittansicht durch die Verschlussvorrichtung der Figuren 2 und 3.

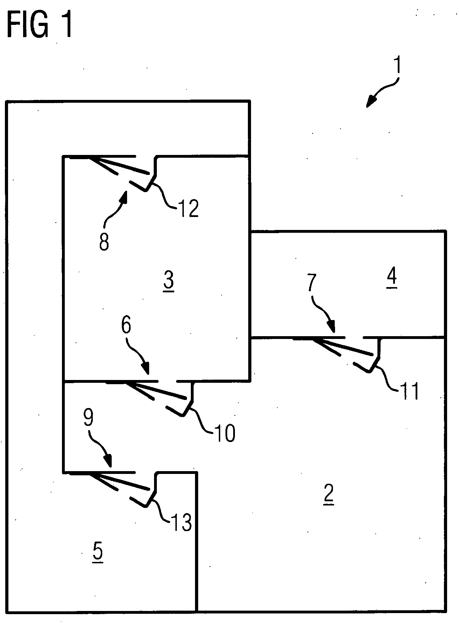

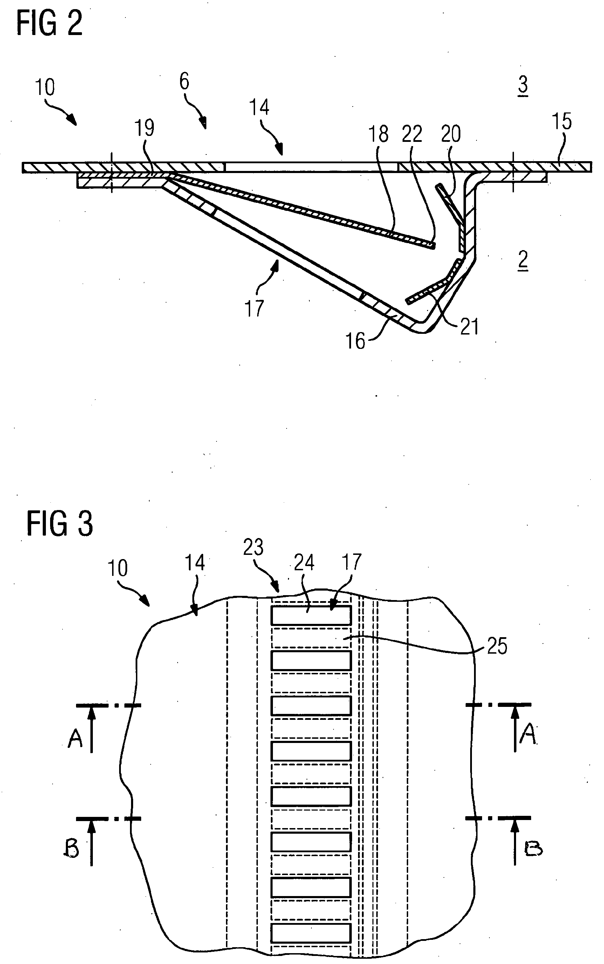

Figur 1 zeigt eine Schaltanlage 1 in Form einer luftisolierten Mittelspannungs-Schaltanlage mit Funktionsräumen 2 bis 5, wobei zwischen benachbarten Funktionsräumen der Funktionsräume 2 bis 5 Durchgangsöffnungen 6 bis 9 vorgesehen sind, um während eines normalen Betriebsfalles der Schaltanlage 1 einen ausreichenden Luftaustausch zwischen den einzelnen Funktionsräumen zu ermöglichen und zu gewährleisten. Die Funktionsräume 2 bis 5 können dabei beispielsweise zur Aufnahme eines Leistungsschalters, eines Niederspannungsbereiches, von Sammelschienen oder Kabelabgängen oder auch Druckentlastungsbereichen vorgesehen sein. Die Durchgangsöffnungen 6 bis 9 weisen jeweils eine Verschlussvorrichtung 10 bis 13 auf, mit welcher Verschlussvorrichtung der Luftaustausch zwischen den benachbarten Funktionsräumen in einem Fehlerfall, beispielsweise durch einen Kurzschluss oder dergleichen, welcher zu einem Störlichtbogen in einem Funktionsraum führt, verhindert wird. Die Verschlussvorrichtungen 10 bis 13 werden im Folgenden anhand der Figuren 2 bis 4 näher erläutert. Figur 2 zeigt eine Schnittansicht, durch die Verschlussvorrichtung 10, welche steht stellvertretend für die Verschlussvorrichtungen der Figur 1 beschrieben wird und zwischen dem ersten Funktionsraum 2 und dem zweiten Funktionsraum 3 angeordnet ist. Die Verschlussvorrichtung 10 zum Verschließen der Durchgangsöffnung 6 weist dazu einen ersten Durchgangsöffnungsbereich 14 auf, welcher in einer Schottwand 15 vorgesehen ist, wobei die Schottwand 15 zum Trennen von erstem Funktionsraum 2 und zweitem Funktionsraum 3 vorgesehen ist. Ein Schottblech 16 ist an der Schottwand 15 befestigt und weist einen zweiten Durchgangsöffnungsbereich 17 auf. Zwischen der Schottwand 15 und dem Schottblech 16 ist eine Klappe 18 angeordnet, welche an einem ersten Ende 19 biegbar zwischen der Schottwand 15 und dem Schottblech 16 befestigt ist. Verriegelungsbleche 20 und 21 sind zwischen der Schottwand 15 und dem Schottblech 16 angeordnet. Das freie Ende desjenigen Verriegelungsbleches, welches dem zu schließenden Durchgangsöffnungsbereich benachbart angeordnet ist, wird beim Schließen der Klappe 18 elastisch verbogen, bis die Klappe 18 geschlossen ist und das entsprechende Verriegelungsblech in seine Ausgangsstellung zurückklappt, so dass verhindert wird, dass sich die Klappe 18 durch wirbelnde Strömungen erneut öffnen kann, indem ein zweites Ende 22 der Klappe 18, welches sich im geöffneten Zustand frei zwischen der Schottwand 15 und dem Schottblech 16 befindet, dann durch das entsprechende Verriegelungsblech gegen ein Zurückbewegen verriegelt ist.

Im Falle eines Fehlers im ersten Funktionsraum 2 und damit verbundener Druckbeaufschlagung aus dem ersten Funktionsraum 2 verbiegt sich die Klappe 18 in der Figur 2 nach oben und verschließt den ersten Durchgangsöffnungsbereich 14 der Schottwand 15, so dass ein Übertreten der heißen Gase bzw. der Druckbeaufschlagung aus dem ersten Funktionsraum 2 in den zweiten Funktionsraum 3 wirksam unterbunden wird, wo hingegen bei einem Fehler im zweiten Funktionsraum 3 und entsprechender Druckbeaufschlagung sich die Klappe 18 in der Figur 2 nach unten verbiegt und den zweiten Durchgangsöffnungsbereich 17 des Schottbleches 16 verschließt, so dass ein Übertreten von heißen Gasen bzw. der Druckbeaufschlagung aus dem zweiten Funktionsraum 3 in den ersten Funktionsraum 2 ebenfalls wirksam verhindert ist. Mit anderen Worten ist somit eine bidirektionale Verschlussvorrichtung gebildet, welche abhängig vom Entstehen des Fehlers und der damit verbundenen Druckbeaufschlagung die Durchgangsöffnung 6 zwischen erstem Funktionsraum 2 und zweitem Funktionsraum 3 verschließt.

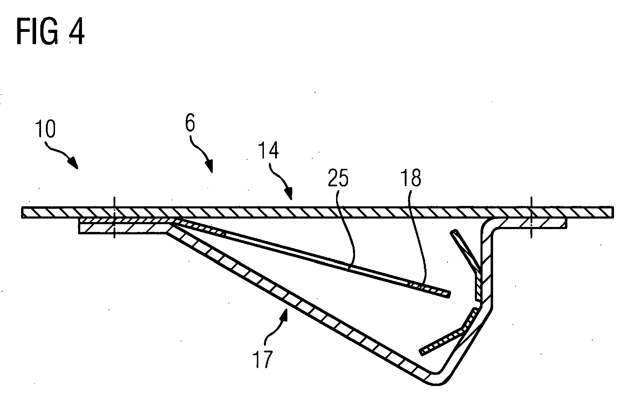

Figur 3 zeigt eine Draufsicht auf die Verschlussvorrichtung 10 der Figur 2, wobei in der Figur 3 die Schottwand 15 von oben dargestellt ist, welche über eine durchgezogen dargestellte erste Schlitzanordnung 23 mit rechteckigen Schlitzen, von denen lediglich einer mit 24 bezeichnet ist, verfügt. Unterhalb der Schottwand 15 und figürlich daher nicht ersichtlich befindet sich das Schottblech 16 mit einer zweiten Schlitzanordnung, welche in der Figur 3 nicht ersichtlich ist, welche aber ebenfalls über rechteckige Schlitze verfügt, die lagegleich mit den Schlitzen 24 der ersten Schlitzanordnung 23 angeordnet sind, so dass die zwischen der Schottwand 15 und dem Schottblech 16 angeordnete Klappe 18, welche eine versetzt zur ersten und zur zweiten Schlitzanordnung angeordnete Schlitzanordnung aufweist, die in der Figur 3 gestrichelt dargestellt über rechteckige Schlitze 25 verfügt, bei Druckbeaufschlagung aus dem ersten Funktionsraum 2 oder der zweiten Funktionsraum 3 zum jeweiligen Verschließen von erstem Durchgangsöffnungsbereich 14 oder zweitem Durchgangsöffnungsbereich 17 ausgebildet ist. Figur 3 zeigt zwei Schnittlinien, von denen eine mit AA bezeichnet ist, und den Schnitt, der in der Figur 2 dargestellt ist, bezeichnet, eine weitere ist mit BB bezeichnet und kennzeichnet den Schnitt durch die Verschlussvorrichtung 10, wie in Figur 4 dargestellt.

Figur 4 zeigt die Verschlussvorrichtung 10 mit der Durchgangsöffnung 6, wobei der erste Durchgangsöffnungsbereich 14 in der Schnittposition BB der Figur 4 in einem Bereich ohne Schlitz dargestellt ist, ebenso wie der zweite Durchgangsöffnungsbereich 17, welcher in den Schnitt BB der Figur 4 ebenfalls keine Öffnung aufweist, wo hingegen die Klappe 18 mit ihrer dritten Schlitzanordnung im Schnitt BB der Figur 4 einen Schlitz 25 aufweist. Aus den Figuren 2 bis 4 ist somit erkennbar, dass die erste Schlitzanordnung des ersten Durchgangsöffnungsbereichs und die zweite Schlitzanordnung des zweiten Durchgangsöffnungsbereichs bzw. die jeweiligen Schlitze die gleiche Position aufweisen bzw. übereinander angeordnet sind, wohingegen die dritte Schlitzanordnung der Klappe 18 versetzt sowohl zur ersten als auch zur zweiten Schlitzanordnung angeordnet ist, so dass bei Druckbeaufschlagung aus dem ersten oder dem zweiten Funktionsraum die versetzte dritte Schlitzanordnung der Klappe 18 entweder den ersten Durchgangsöffnungsbereich 14 oder den zweiten Durchgangsöffnungsbereich 17 verschließt und somit entsprechend den jeweiligen Funktionsraum vor Druckbeaufschlagung aus dem mit einem Störfall behafteten anderen Funktionsraum sicher schützt.

### Bezugszeichenliste

- 1: Schaltanlage
- 2 bis 5: Funktionsräume
- 6 bis 9: Durchgangsöffnungen
- 10 bis 13: Verschlussvorrichtungen
- 14: erster Durchgangsöffnungsbereich
- 15: Schottwand
- 16: Schottblech
- 17: zweiter Durchgangsöffnungsbereich
- 18: Klappe
- 19: erstes Ende
- 20, 21: Verriegelungsbleche
- 22: zweites Ende
- 23: erste Schlitzanordnung
- 24, 25: Schlitz
- AA, BB: Schnittlinien

## Patentansprüche

1. Verschlussvorrichtung (10, 11, 12, 13) zum Verschließen einer Durchgangsöffnung (6, 7, 8, 9) zwischen einem ersten Funktionsraum (2) und einem zweiten Funktionsraum (3) einer Schaltanlage (1) mit einem ersten Durchgangsöffnungsbereich (14) und einer Klappe (18) zum Verschließen des ersten Durchgangsöffnungsbereiches (14) bei Druckbeaufschlagung aus dem ersten Funktionsraum (2),
wobei
ein zweiter Durchgangsöffnungsbereich (17) der Durchgangsöffnung (6, 7, 8, 9) derart vorgesehen ist, dass bei Druckbeaufschlagung aus dem zweiten Funktionsraum (3) der zweite Durchgangsöffnungsbereich (17) der Durchgangsöffnung (6, 7, 8, 9) durch die Klappe (18) verschließbar ausgebildet ist,
**dadurch gekennzeichnet, dass**
der erste Durchgangsöffnungsbereich (14) durch Öffnungen in einer Schottwand (15) zwischen dem ersten Funktionsraum (2) und dem zweiten Funktionsraum (3) sowie der zweite Durchgangsöffnungsbereich (17) durch ein an der Schottwand (15) angeordnetes und befestigtes und mit weiteren Öffnungen versehenes Schottblech (16) gebildet sind, wobei die Klappe (18) mit einem ersten Ende (19) zwischen der Schottwand (15) und dem Schottblech (16) biegbar befestigt ist.

2. Verschlussvorrichtung (10, 11, 12, 13) nach Anspruch 1,
**dadurch gekennzeichnet, dass**
der erste Durchgangsöffnungsbereich (14) eine erste Schlitzanordnung (23) sowie der zweite Durchgangsöffnungsbereich (17) eine zweite Schlitzanordnung und die Klappe (18) eine zur ersten und zur zweiten Schlitzanordnung versetzt angeordnete dritte Schlitzanordnung derart aufweisen, dass bei Druckbeaufschlagung aus dem ersten Funktionsraum (2) oder dem zweiten Funktionsraum (3) die Klappe (18) und der erste Durchgangsöffnungsbereich (14) oder die Klappe (18) und der zweite Durchgangsöffnungsbereich (17) die Durchgangsöffnung (6, 7, 8, 9) verschließen.

## Claims

1. Closing device (10, 11, 12, 13) for closing a through-opening (6, 7, 8, 9) between a first functional area (2) and a second functional area (3) of switchgear (1) with a first through-opening region (14) and a flap (18) for closing the first through-opening region (14) when pressure is applied from the first functional area (2),
wherein
a second through-opening region (17) of the through-opening (6, 7, 8, 9) is provided such that, on application of pressure from the second functional area (3), the second through-opening region (17) of the through-opening (6, 7, 8, 9) is embodied so that it is able to be closed by the flap (18),
**characterised in that** the first through-opening region (14) is formed by openings in a bulkhead wall (15) between the first functional area (2) and the second functional area (3) and the second through-opening region (17) is formed by a bulkhead plate (16) arranged on and fastened to the bulkhead wall (15) and provided with further openings, wherein the flap (18) is fastened with a first end (19) flexibly between the bulkhead wall (15) and the bulkhead plate (16).

2. Closing device (10, 11, 12, 13) according to claim 1,
**characterised in that** the first through-opening region (14) has a first slot arrangement (23) and the second through-opening region (17) has a second slot arrangement and the flap (18) has a third slot arrangement offset in relation to the first and the second slot arrangement such that, on application of pressure from the first functional area (2) or the second functional area (3), the flap (18) and the first through-opening region (14) or the flap (18) and the second through-opening region (17) close the through-opening (6, 7, 8, 9).

## Revendications

1. Dispositif ( 10, 11, 12, 13 ) d'obturation d'une ouverture ( 6, 7, 8, 9 ) de passage entre un premier espace ( 2 ) fonctionnel et un deuxième espace ( 3 ) fonctionnel d'une installation ( 1 ) de distribution électrique ayant une première partie ( 14 ) de l'ouverture de passage et un volet ( 18 ) pour fermer la première partie ( 14 ) de l'ouverture de passage par alimentation en pression à partir du premier espace ( 2 ) fonctionnel,
dans lequel
il est prévu une deuxième partie ( 17 ) de l'ouverture ( 6, 7, 8, 9 ) de passage de manière à ce que, en alimentant en pression à partir du deuxième espace ( 3 ) fonctionnel, la deuxième partie ( 17 ) de l'ouverture ( 6, 7, 8, 9 ) de passage soit constituée de façon à pouvoir être fermée par le volet,
**caractérisé en ce que**
la première partie ( 14 ) de l'ouverture de passage est formée par des ouvertures dans une paroi ( 15 ) de cloisonnement entre le premier espace ( 2 ) fonctionnel et le deuxième espace ( 3 ) fonctionnel et la deuxième partie ( 17 ) de l'ouverture de passage est formée par une tôle ( 16 ) de cloisonnement mise et fixée sur la paroi ( 15 ) de cloisonnement et pourvue d'autres ouvertures, le volet ( 18 ) étant par une première extrémité ( 19 ) fixé de manière pliante entre la paroi ( 15 ) de cloisonnement et la tôle ( 16 ) de cloisonnement.

2. Dispositif ( 10, 11, 12, 13 ) d'obturation suivant la revendication 1,
**caractérisé en ce que**
la première partie ( 14 ) de l'ouverture de passage a un premier agencement ( 23 ) de fentes tandis que la deuxième partie ( 17 ) de l'ouverture de passage a un deuxième agencement de fentes et le volet ( 18 ) a un troisième agencement de fentes, décalé par rapport aux premier et deuxième agencements de fentes, de manière à ce que, en alimentant en pression à partir du premier espace ( 2 ) fonctionnel ou du deuxième espace ( 3 ) fonctionnel, le volet ( 18 ) et la première partie ( 14 ) de l'ouverture de passage ou le volet ( 18 ) et la deuxième partie ( 17 ) de l'ouverture de passage ferment l'ouverture ( 6, 7, 8, 9 ) de passage.
